# FASCICULE DE BREVET EUROPEEN

(11) **EP 2 681 079 B1**
(45) Date de publication et mention de la délivrance du brevet: **17.06.2015**
(21) Numéro de dépôt: 12711947.7
(22) Date de dépôt: 28.02.2012
(51) Int. Cl.: B60R 1/06

(54) **COQUE DE RÉTROVISEUR LATÉRAL DE VÉHICULE À RESSERRÉ AÉRODYNAMIQUE ET DÉCROCHEMENT ANTI-SIFFLEMENT**
SEITLICHE RÜCKBLICKSPIEGELSCHALE FÜR EIN FAHRZEUG MIT AERODYNAMISCHER VERENGUNG UND ANTIPFEIFDISKONTINUITÄT
VEHICLE LATERAL REAR VIEW MIRROR SHELL WITH AERODYNAMIC NARROWING AND ANTI WHISTLE DISCONTINUITY

(30) Priorité: 02.03.2011 FR 1151707
(43) Date de publication de la demande: 08.01.2014
(73) Titulaire: Peugeot Citroën Automobiles SA, 78140 Vélizy Villacoublay (FR)
(72) Inventeur: PIRANDA, Damien, F-25340 Anteuil (FR); PIARD, Helene, F-25200 Montbeliard (FR); VERGNE, Sandrine, F-92290 Chatenay Malabry (FR); VAN HERPE, Francois, F-92210 St Cloud (FR)
(86) Numéro de dépôt international: PCT/FR2012/050407
(87) Numéro de publication internationale: WO 2012/117194

(56) Documents cités:
- EP-A1- 1 787 862
- EP-A2- 1 281 573
- DE-A1- 19 825 705
- DE-A1-102005 019 778

## Description

L'invention concerne les rétroviseurs latéraux qui équipent certains véhicules, éventuellement de type automobile, et plus précisément les rétroviseurs latéraux du type dit à (zone de) resserré aérodynamique.

Comme le sait l'homme de l'art, certains rétroviseurs latéraux de véhicules comportent une coque, comprenant sur une face supérieure une arête sommitale (ou "ligne de style") qui est prolongée vers l'arrière (du véhicule) par une partie terminale qui est solidarisée à, et prolongée vers l'arrière par, un cadre auquel est solidarisé un miroir. La partie arrière supérieure, qui s'étend sensiblement de l'arête sommitale jusqu'à l'extrémité libre du cadre, définit une zone dite de resserré aérodynamique du fait de la diminution progressive de la section (ou légère déclivité vers l'arrière)..

Il est important de noter que l'on entend ici par coque un élément qui délimite ou contribue à délimiter la cavité d'un rétroviseur latéral. Il pourra donc s'agir d'un boîtier ou d'une partie d'un boîtier ou encore d'une pièce solidarisée à un boîtier.

L'arête sommitale précitée n'a pas comme seule fonction d'assurer un effet de style. En effet, elle a également une fonction aérodynamique en coopération avec la zone de resserré aérodynamique. Plus précisément, l'arête sommitale sert à décoller l'air qui provient de l'avant du véhicule afin qu'il retombe dans la zone de resserré aérodynamique, de manière à permettre une réduction notable du coefficient aérodynamique SCx. Il est rappelé que ce dernier (SCx) est le produit du coefficient de forme ou de traînée aérodynamique Cx par le maître couple S (en m²).

Hélas, il arrive fréquemment qu'un rétroviseur latéral à zone de resserré aérodynamique induise des sifflements qui peuvent, dans certaines conditions, et notamment lorsque la vitesse du véhicule est comprise entre environ 60 km/h et environ 170 km/h, s'avérer gênants pour les passagers du véhicule. On notera que les fréquences de ces sifflements sont généralement comprises entre environ 3000 Hz et environ 5000 Hz.

Certaines études semblent démontrer que les sifflements résultent de la formation sous la couche limite d'air, dans une partie de la zone de resserré aérodynamique et au-delà d'une vitesse seuil, de tourbillons (ou oscillations) auto-entretenu(e)s, et donc relativement ordonné(e)s et auto-amplifié(e)s.

Afin de tenter d'améliorer la situation, il a été proposé d'obstruer avec une mousse l'espace libre qui est situé entre la coque et le cadre. Cependant, cette solution ne s'avère pas efficace de façon systématique. En effet, les sifflements persistent lorsque la mousse a été mal positionnée, et peuvent encore survenir lorsque la mousse a été correctement positionnée. En outre, l'efficacité de la mousse peut varier en fonction des conditions météorologiques. De plus, la mise en place de la mousse s'avère relativement onéreuse. Le document DE 198 25 705 révèle un coque pour un rétroviseur latéral sensiblement selon le préambule de la revendication 1.

L'invention a donc pour but de proposer une solution alternative destinée à supprimer les sifflements des rétroviseurs latéraux à zone de resserré aérodynamique, sans diminuer de façon significative le coefficient aérodynamique SCx.

Elle propose notamment à cet effet une coque selon revendication 1.

Le caractère non rectiligne de la ligne de recollement arrière L2 détruit avantageusement la régularité de l'écoulement turbulent qui est situé sous la couche limite dans la zone de resserré aérodynamique et donc provoque une répartition de l'énergie sur une bande de fréquences assez large. De ce fait, il n'y a plus suffisamment d'énergie pour produire des sifflements audibles.

La coque selon l'invention peut comporter d'autres caractéristiques qui peuvent être prises séparément ou en combinaison, et notamment :
- la forme du décrochement peut être propre à faire retomber l'air suivant une ligne de recollement intermédiaire en arc de cercle, de sorte qu'il puisse ensuite re-décoller puis retomber suivant une ligne de recollement arrière présentant au moins deux points d'inflexion;
- la forme du décrochement peut être sensiblement rectiligne ou bien curviligne;
- le décrochement peut présenter une hauteur variable;
   ➢ la hauteur peut croître entre une première extrémité interne et une zone intermédiaire, puis décroître entre cette zone intermédiaire et une seconde extrémité externe, opposée à la première extrémité interne;
- le décrochement peut présenter une face avant présentant une première inclinaison de l'avant vers l'arrière, et une face supérieure présentant une seconde inclinaison de l'avant vers l'arrière, strictement inférieure à celle de cette première inclinaison;
- le décrochement peut comprendre une extrémité supérieure située à un niveau strictement inférieur à celui de l'arête sommitale;
- le décrochement peut présenter une hauteur maximale comprise entre environ 1 mm et environ 5 mm. Par exemple, cette hauteur maximale peut être égale à environ 2 mm;
- le décrochement peut débuter à une distance de l'arête sommitale qui est comprise entre environ 10 mm et environ 60 mm. Par exemple, cette distance peut être sensiblement égale à 20 mm;
- le décrochement est de préférence non parallèle à l'arête sommitale.

L'invention propose également un rétroviseur latéral destiné à équiper un véhicule et comprenant une coque du type de celle présentée ci-avant et solidarisée à, et prolongée vers l'arrière par, un cadre auquel est solidarisé un miroir.

L'invention propose également un véhicule, éventuellement de type automobile, et comprenant au moins un rétroviseur latéral du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective du côté avant, un exemple de rétroviseur latéral de véhicule équipé d'un exemple de réalisation de coque selon l'invention,
- les figures 2 et 3 illustrent schématiquement, dans des vues en perspective du côté avant selon deux angles d'observation différents, une partie supérieure de la coque de la figure 1, et
- la figure 4 illustre schématiquement, dans une vue du dessus, le rétroviseur latéral de la figure 1 avec une matérialisation des lignes de recollement intermédiaire et arrière.

Les dessins annexés pourront non seulement servir à compléter l'invention, mais aussi contribuer à sa définition, le cas échéant.

L'invention a pour but d'offrir un rétroviseur latéral (R) à zone de resserré aérodynamique (ZR) dépourvu de sifflements audibles et présentant un coefficient aérodynamique SCx élevé.

Dans ce qui suit, on considère, à titre d'exemple non limitatif, que le véhicule est de type automobile. Il s'agit par exemple d'une voiture. Mais, l'invention n'est pas limitée à ce type de véhicule. Elle concerne en effet tout type de véhicule comportant au moins un rétroviseur latéral (R) à zone de resserré aérodynamique (ZR). Par conséquent, l'invention concerne également, et notamment, les motocyclettes, les camions, les véhicules utilitaires, les véhicules de chantier, les bus (ou cars), et certains bateaux à moteur.

On notera que dans ce qui suit les notions "d'amont" et "d'aval" sont définies par rapport au sens de circulation de l'air lorsque le véhicule avance. Par conséquent, une première partie est dite en amont d'une seconde partie lorsqu'elle est située plus près de la partie avant du véhicule que la seconde partie, et donc lorsqu'elle est balayée par l'air avant cette seconde partie.

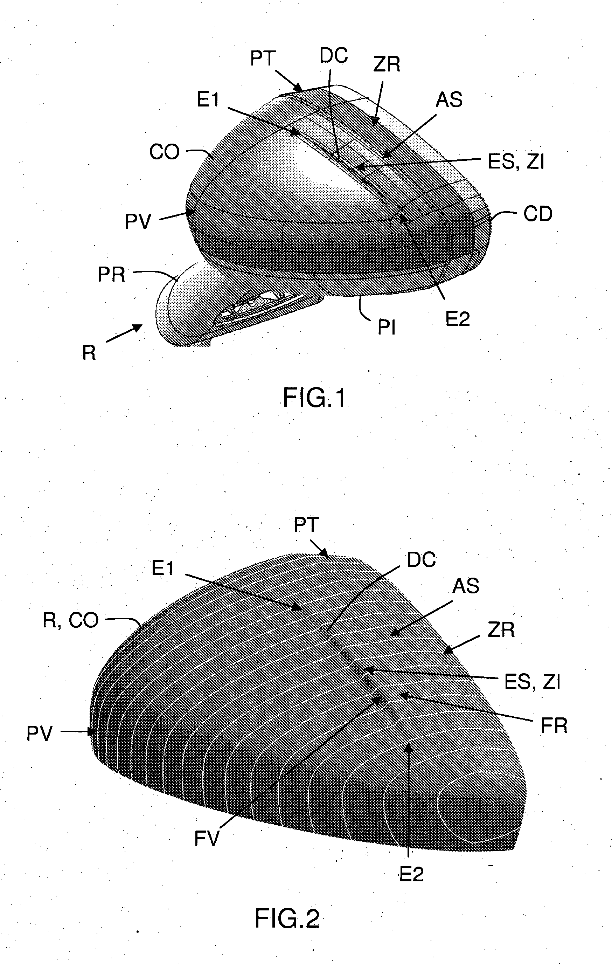

On a schématiquement représenté sur la figure 1 un exemple de rétroviseur latéral R à zone de resserré aérodynamique ZR et comprenant une coque CO selon l'invention.

Ce rétroviseur latéral R comprend notamment un pied de fixation PR, une coque CO et un cadre CD.

Le pied de fixation PR est solidarisé à une partie avant PV de la coque CO et destiné à être solidarisé à la carrosserie d'un véhicule, généralement au voisinage d'une portière avant.

Il est important de noter que l'on entend ici par coque CO un élément qui délimite ou contribue à délimiter la cavité d'un rétroviseur latéral R qui est ouverte vers l'arrière et qui contient des moyens de fixation internes et d'éventuels équipements électriques (moteur(s) électrique(s) de positionnement, circuit électrique de chauffage, par exemple). Il pourra donc s'agir d'un boîtier ou d'une partie d'un boîtier (comme dans l'exemple de réalisation non limitatif illustré sur les figures 1 à 3) ou encore d'une pièce solidarisée à un boîtier. On notera que dans l'exemple de réalisation non limitatif illustré sur les figures 1 à 3, la coque CO est la partie supérieure d'un boîtier qui comprend par ailleurs une partie inférieure PI. D'une manière générale la coque CO selon l'invention est un élément d'un rétroviseur latéral R qui comprend le décrochement DC qui sera décrit plus loin.

Cette coque CO comprend, ici dans sa partie supérieure, une arête sommitale AS qui constitue une ligne de hauteur maximale qui est prolongée vers l'arrière du véhicule, c'est-à-dire à l'opposé de la partie avant PV, par une partie terminale PT. Cette arête sommitale AS est destinée à constituer une zone de décollement pour l'air qui est issu de la partie avant PV. Mais, elle peut également participer au style.

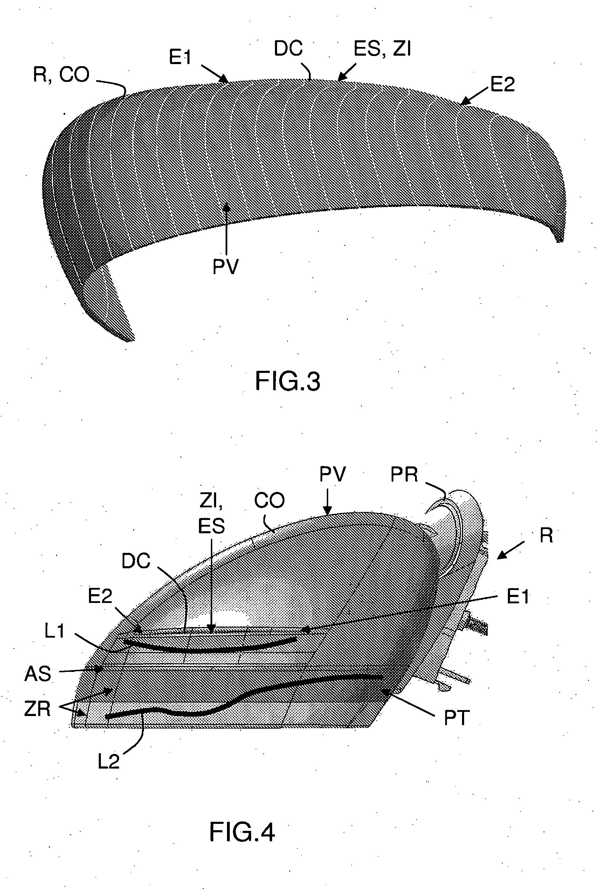

Le cadre CD est destiné à être solidarisé à la partie terminale PT de la coque CO, par exemple par clippage. Il (CD) prolonge vers l'arrière cette partie terminal PT avec laquelle il définit une zone dite de resserré aérodynamique ZR dans laquelle l'air décollé par l'arête sommitale AS vient se recoller suivant une ligne de recollement arrière L2 (voir figure 4) sur laquelle on reviendra plus loin. On notera qu'un miroir (non représenté) est logé dans le cadre CD et solidarisé (fixement ou non) à ce dernier (CD).

Comme illustré sur les figures 1 à 4, la coque CO comprend également sur sa partie supérieure, et en amont de son arête sommitale AS, un décrochement (ou "carre aéro-acoustique") DC vers le haut et, ici, orienté au moins en partie sensiblement suivant une direction transversale (c'est-à-dire suivant la largeur du rétroviseur latéral R).

On entend ici par "décrochement vers le haut" une protubérance qui comprend une face avant FV en pente montante de l'avant vers l'arrière par rapport à la face externe de la partie supérieure de la coque CO, et une face arrière FR prolongeant la face avant FV vers l'arrière selon une pente de l'avant vers l'arrière, de préférence notablement moins prononcée que celle de la face avant FV (voir figure 2). On notera que dans l'exemple non limitatif illustré sur la figure 2, la face avant FV présente une première inclinaison de l'avant vers l'arrière, comprise entre environ 30° et environ 100°, et la face supérieure FR présente une seconde inclinaison de l'avant vers l'arrière, strictement inférieure à celle de la première inclinaison et par exemple comprise entre environ 0° et environ 20°.

On notera que ce décrochement DC fait préférentiellement partie intégrante de la coque CO. Dans ce cas, il peut être réalisé par moulage en même temps que la coque CO. Mais, il pourrait s'agir d'une pièce rapportée sur la face externe de la partie supérieure de la coque CO, par exemple par collage ou vissage.

On notera également que ce décrochement DC peut éventuellement participer au style du rétroviseur latéral R.

Comme illustré sur la figure 4, ce décrochement DC présente une forme qui est propre à faire décoller l'air (issu de la partie avant PV) de manière à le faire retomber sensiblement en amont de l'arête sommitale AS suivant une ligne de recollement intermédiaire L1 non rectiligne. Cet air recollé une première fois suivant une ligne de recollement intermédiaire non rectiligne L1 va ensuite être décollé par l'arête sommitale AS en poursuivant son trajet vers l'arrière, puis retomber suivant une ligne de recollement arrière L2 non rectiligne (située dans la zone de resserré aérodynamique ZR), évitant ainsi la production de sifflements audibles.

Le caractère non rectiligne de la ligne de recollement intermédiaire L1 résulte notamment de l'action du décrochement (ou "carre aéro-acoustique") DC sur le champ de vitesses du flux d'air induit par le bord d'attaque de la partie avant de la coque CO et par la forme de la partie supérieure de cette dernière (CO). C'est ce caractère non rectiligne qui va permettre à son tour à la ligne de recollement arrière L2 de présenter un caractère non rectiligne propre à supprimer les sifflements audibles. En fait, ce caractère non rectiligne de la ligne de recollement arrière L2 détruit la régularité de l'écoulement turbulent situé sous la couche limite et donc provoque une répartition de l'énergie sur une bande de fréquences assez large, si bien qu'il n'y a plus suffisamment d'énergie pour produire des sifflements audibles.

Comme illustré non limitativement sur la figure 4, la forme du décrochement DC peut être propre à faire retomber l'air suivant une ligne de recollement intermédiaire L1 en arc de cercle qui permet, une fois qu'il a été de nouveau décollé par l'arête sommitale AS, de le faire retomber suivant une ligne de recollement arrière L2 qui présente au moins deux points d'inflexion.

A titre d'exemple, la forme du décrochement DC peut être sensiblement rectiligne sensiblement suivant la direction transversale, comme illustré non limitativement sur les figures 1 à 4. Mais, dans une variante de réalisation non illustrée, la forme du décrochement DC pourrait être curviligne (avec ou sans point(s) d'inflexion). A titre d'exemple, cette forme pourrait être sensiblement en L.

Par ailleurs, afin de favoriser la formation d'une ligne de recollement intermédiaire L1 non rectiligne, le décrochement DC peut présenter une hauteur variable, comme illustré sur la figure 3. Cela amplifie en effet l'action du décrochement DC sur le champ de vitesses du flux d'air et donc renforce la courbure de la ligne de recollement intermédiaire L1.

Par exemple, et comme illustré non limitativement sur la figure 3, la hauteur du décrochement DC peut commencer par croître entre une première extrémité interne E1 (située du côté du véhicule) et une zone intermédiaire ZI (où la hauteur est maximale), puis elle peut décroître entre cette zone intermédiaire ZI et une seconde extrémité externe E2, opposée à la première extrémité interne E1.

De préférence, et comme illustré non limitativement sur les figures 1 et 2, le décrochement DC comprend dans sa zone intermédiaire ZI une extrémité supérieure ES qui est située à un niveau strictement inférieur à celui de l'arête sommitale AS. Cela permet en effet de favoriser le premier recollement du flux d'air (suivant L1) à "bonne" distance de l'arête sommitale AS en vue d'un second décollement aussi proche que possible de ce qui est attendu. Mais, dans une variante, l'extrémité supérieure ES du décrochement DC pourrait être située sensiblement au niveau de l'arête sommitale AS, voire légèrement au dessus du niveau de cette arête sommitale AS.

On notera que le décrochement DC présente de préférence une hauteur maximale qui est comprise entre environ 1 mm et environ 5 mm. Par exemple, sa hauteur maximale peut être choisie égale à environ 2 mm. Plus cette hauteur maximale est faible, plus l'action du décrochement DC est faible, et plus cette hauteur maximale est importante, plus le décrochement DC peut dégrader la traînée et donc le coefficient aérodynamique SCx.

On notera également qu'il est préférable que le décrochement DC débute à une distance de l'arête sommitale AS qui est comprise entre environ 10 mm et environ 60 mm. Par exemple, cette distance peut être sensiblement égale à 20 mm. Plus cette distance est faible, plus le flux d'air risque de recoller partiellement sur l'arête sommitale AS et non pas intégralement en amont de cette dernière (AS), et plus cette distance est importante, plus le caractère non rectiligne du flux d'air recollé en amont de l'arête sommitale AS risque d'être amoindrie avant que ce flux d'air n'atteigne cette dernière (AS).

On notera également, comme illustré non limitativement sur les figures 1, 2 et 4, qu'il est préférable que le décrochement DC ne soit pas parallèle à l'arête sommitale AS. Cela permet en effet de détruire encore plus la régularité de l'écoulement turbulent situé sous la couche limite dans la zone de resserré aérodynamique ZR.

On notera également que, dans l'exemple non limitatif illustré sur les figures 1 à 4, le décrochement DC ne s'étend que sur une partie de la largeur (direction transversale) de la coque CO qui est légèrement décalée vers le côté extérieur. Mais, le positionnement du décrochement DC dépend de la forme du rétroviseur latéral R. Par conséquent, il (DC) pourra être centré par rapport à la largeur du rétroviseur latéral R ou bien légèrement décentré du côté intérieur.

Il est en effet important qu'il s'étende préférentiellement du côté extérieur, plutôt que du côté intérieur, du fait qu'en l'absence de décrochement DC les sifflements sont majoritairement induits du côté extérieur.

On notera également que grâce à l'invention, il n'est plus nécessaire de placer une mousse entre la coque CO et le cadre CD, ce qui permet de réduire le coût du rétroviseur latéral R.

L'invention ne se limite pas aux modes de réalisation de coque, de rétroviseur latéral et de véhicule décrits ci-avant, seulement à titre d'exemple, mais elle englobe toutes les variantes que pourra envisager l'homme de l'art dans le cadre des revendications ci-après.

## Revendications

1. Coque (CO) pour un rétroviseur latéral (R) de véhicule, ladite coque (CO) comprenant une arête sommitale (AS), d'une part, prolongée vers l'arrière par une partie terminale (PT) propre à être solidarisée à, et prolongée vers l'arrière par, un cadre (CD) auquel est solidarisé un miroir d'autre part, une partie arrière supérieure s'étendant de l'arête sommitale (AS) jusqu'à l'extrémité libre du cadre (CD) définissant une zone dite de resserré aérodynamique (ZR) du fait de la diminution progressive de la section de la coque ou d'une faible déclivité vers l'arrière de cette dernière, coopérant avec l'arête sommitale (AS) pour faire décoller l'air provenant de la partie avant (PV) du véhicule pour qu'il retombe dans la zone dite de resserré aérodynamique (ZR) **caractérisée en ce que** l'arête sommitale est située sur une face externe de la partie supérieure de la coque et **en ce que** ladite coque comprend, en amont de ladite arête sommitale (AS), un décrochement (DC) présentant une protubérance s'étendant sensiblement suivant une direction transversale par rapport au flux d'air, ladite protubérance comprenant une face avant (FV) en pente montante de l'avant vers l'arrière par rapport à la face externe de la partie supérieure de la coque CO, et une face arrière (FR) prolongeant la face avant (FV) vers l'arrière selon une pente descendante de l'avant vers l'arrière , l'action dudit décrochement (DC) sur le champ de vitesse du flux d'air induit par le bord d'attaque de la partie avant (PV) de la coque (CO) et la forme de la partie supérieure de cette dernière étant propres à faire décoller l'air de manière à le faire retomber sensiblement en amont de ladite arête sommitale (AS) suivant une ligne de recollement intermédiaire (L1) non rectiligne, de sorte que cet air soit ensuite décollé par ladite arête sommitale (AS) et qu'il retombe suivant une ligne de recollement arrière (L2) non rectiligne située dans ladite zone de resserré aérodynamique (ZR) afin de ne pas induire de sifflement audible.

2. Coque selon la revendication 1, **caractérisée en ce que** la face arrière (FR) présente une pente de l'avant vers l'arrière, strictement inférieure à celle de la face avant (FV).

3. Coque selon l'une des revendications 1 ou 2, **caractérisée en ce que** ladite forme du décrochement (DC) est propre à faire retomber l'air suivant une ligne de recollement intermédiaire (L1) en arc de cercle de sorte qu'il puisse ensuite re-décoller puis retomber suivant une ligne de recollement arrière (L2) présentant au moins deux points d'inflexion.

4. Coque selon l'une des revendications 1 à 3, **caractérisée en ce que** ladite forme du décrochement (DC) est sensiblement rectiligne.

5. Coque selon l'une des revendications 1 à 3, **caractérisée en ce que** ladite forme du décrochement (DC) est curviligne.

6. Coque selon l'une des revendications 1 à 5, **caractérisée en ce que** ledit décrochement (DC) présente une hauteur variable.

7. Coque selon la revendication 6, **caractérisée en ce que** ladite hauteur croît entre une première extrémité interne (E1) et une zone intermédiaire (ZI), puis décroît entre ladite zone intermédiaire (ZI) et une seconde extrémité externe (E2), opposée à ladite première extrémité interne (E1).

8. Coque selon l'une des revendications 1 à 7, **caractérisée en ce que** ledit décrochement (DC) présente une face avant (FV) présentant une première inclinaison de l'avant vers l'arrière, et une face supérieure (FR) présentant une seconde inclinaison de l'avant vers l'arrière, strictement inférieure à celle de ladite première inclinaison.

9. Coque selon l'une des revendications 1 à 8, **caractérisée en ce que** ledit décrochement (DC) comprend une extrémité supérieure (ES) située à un niveau strictement inférieur à celui de ladite arête sommitale (AS).

10. Coque selon-l'une des revendications 1 à 9, **caractérisée en ce que** ledit décrochement (DC) présente une hauteur maximale comprise entre environ 1 mm et environ 5 mm.

11. Coque selon la revendication 10, **caractérisée en ce que** ledit décrochement (DC) présente une hauteur maximale égale à environ 2 mm.

12. Coque selon l'une des revendications 1 à 11, **caractérisée en ce que** ledit décrochement (DC) débute à une distance de ladite arête sommitale (AS) qui est comprise entre environ 10 mm et environ 60 mm.

13. Coque selon la revendication 12, **caractérisée en ce que** ledit décrochement (DC) débute à une distance de ladite arête sommitale (AS) qui est sensiblement égale à 20 mm.

14. Coque selon l'une des revendications 1 à 13, **caractérisée en ce que** ledit décrochement (DC) n'est pas parallèle à ladite arête sommitale (AS).

15. Rétroviseur latéral (R) pour un véhicule, **caractérisé en ce qu'**il comprend une coque (CO) selon l'une des revendications précédentes et solidarisée à, et prolongée vers l'arrière par, un cadre (CD) auquel est solidarisé un miroir.

16. Véhicule, **caractérisé en ce qu'**il comprend au moins un rétroviseur latéral (R) selon la revendication 15.

## Patentansprüche

1. Schale (CO) für einen seitlichen Rückspiegel (R) eines Fahrzeugs, wobei die Schale (CO) einerseits einen Scheitelgrad (AS) umfasst, der nach hinten durch einen Endteil (PT) verlängert ist, der geeignet ist, mit einem Rahmen (CD) fest verbunden und nach hinten durch diesen verlängert zu sein, mit dem andererseits ein Spiegel fest verbunden ist, wobei sich ein oberer Teil vom Scheitelgrads (AS) bis zum Ende des Rahmens (CD) erstreckt, der einen Bereich, genannt aerodynamische Verengung (ZR), aufgrund der zunehmenden Verkleinerung des Abschnitts der Schale oder einer geringfügigen Neigung dieser Letzteren nach hinten definiert, der mit dem Scheitelgrad (AS) zusammenarbeitet, um die Luft, die vom vorderen Teil (PV) des Fahrzeugs stammt, abheben zu lassen, damit sie im Bereich, genannt aerodynamische Verengung (ZR), zurückfällt, **dadurch gekennzeichnet, dass** sich der Scheitelgrad auf einer äußeren Fläche des oberen Teils der Schale befindet, und dadurch, dass die Schale, vorgelagert von dem Scheitelgrad (AS) einen zurückversetzten Teil (DC) umfasst, der einen Vorsprung aufweist, der sich im Wesentlichen gemäß einer transversalen Richtung mit Bezug auf den Luftstrom erstreckt, wobei der Scheitelgrad eine vordere Seite (FV) in aufsteigender Neigung von vorne nach hinten mit Bezug auf die äußere Seite des oberen Teils der Schale CO umfasst, und eine hintere Seite (FR), die die vordere Seite (FV) nach hinten gemäß einer abfallenden Neigung von vorne nach hinten verlängert, wobei die Wirkung des zurückversetzten Teils (DC) hinsichtlich der Geschwindigkeit des Luftstroms, induziert von der Vorderkante des vorderen Teils (PV) der Schale (CO) und der Form des oberen Teils dieser Letzteren geeignet sind, um die Luft derart abheben zu lassen, um sie im Wesentlichen vorgelagert von dem Scheitelgrad (AS) gemäß einer nicht geradlinigen Zwischen-Wiederaufprallline (L1) zurückfallen zu lassen sodass diese Luft in der Folge durch den Scheitelgrad (AS) abgehoben ist und gemäß einer nicht geradlinigen hinteren Wiederaufprallline (L2) zurückfällt, die in dem Bereich der aerodynamischen Verengung (ZR) befindet, um kein hörbares Pfeifen zu induzieren.

2. Schale nach Anspruch 1, **dadurch gekennzeichnet, dass** die hintere Seite (FR) eine Neigung von vorne nach hinten aufweist, die strikt kleiner als diejenige der vorderen Seite (FV) ist.

3. Schale nach einem der Ansprüche 1 oder 2, **dadurch gekennzeichnet, dass** die Form des zurückversetzten Teils (DC) geeignet ist, um die Luft gemäß einer Zwischen-Wiederaufpralllinie (L1) in einem Kreisbogen zurückfallen zu lassen, so dass sie in der Folge wieder abheben und dann gemäß einer hinteren Wiederaufpralllinie (L2) zurückfallen kann, die mindestens zwei Flexionspunkte aufweist.

4. Schale nach einem der Ansprüche 1 bis 3, **dadurch gekennzeichnet, dass** die Form des zurückversetzten Teils (DC) im Wesentlichen geradlinig ist

5. Schale nach einem der Ansprüche 1 bis 3, **dadurch gekennzeichnet, dass** die Form des zurückversetzten Teils (DC) krummlinig ist,

6. Schale nach einem der Ansprüche 1 bis 5, **dadurch gekennzeichnet, dass** der zurückversetzte Teil (DC) eine variable Höhe aufweist.

7. Schale nach Anspruch 6, **dadurch gekennzeichnet, dass** die Höhe zwischen einem ersten inneren Ende (E1) und einem Zwischenbereich (ZI) zunimmt, dann zwischen dem Zwischenbereich (ZI) und einem zweiten äußeren Ende (E2) gegenüber dem ersten inneren Ende (E1) abnimmt.

8. Schale nach einem der Ansprüche 1 bis 7, **dadurch gekennzeichnet, dass** der zurückversetzten Teil (DC) eine vordere Seite (FV) aufweist, die ein erstes Gefälle von vorne nach hinten aufweist, und eine obere Seite (FR), die ein zweites Gefälle von vorne nach hinten aufweist, die streng kleiner als das erste Gefälle ist.

9. Schale nach einem der Ansprüche 1 bis 8, **dadurch gekennzeichnet, dass** der zurückversetzte Teil (DC) ein oberes Ende (ES) aufweist, das sich auf einem Niveau befindet, das strikt niedriger als dasjenige des Scheitelgrads (AS) ist.

10. Schale nach einem der Ansprüche 1 bis 9, **dadurch gekennzeichnet, dass** der zurückversetzte Teil (DC) eine maximale Höhe aufweist, die zwischen ungefähr 1 mm und ungefähr 5 mm liegt.

11. Schale nach Anspruch 10, **dadurch gekennzeichnet, dass** der zurückversetzte Teil (DC) eine maximale Höhe aufweist, die gleich ungefähr 2 mm ist.

12. Schale nach einem der Ansprüche 1 bis 11, **dadurch gekennzeichnet, dass** der zurückversetzte Teil (DC) in einem Abstand von dem Scheitelgrad (AS) ausgeht, die zwischen ungefähr 10 mm und ungefähr 60 mm liegt.

13. Schale nach Anspruche 12, **dadurch gekennzeichnet, dass** der zurückversetzte Teil (DC) in einem Abstand von dem Scheitelgrad (AS) ausgeht, der im Wesentlichen gleich 20 mm ist.

14. Schale nach einem der Ansprüche 1 bis 13, **dadurch gekennzeichnet, dass** der zurückversetzte Teil (DC) nicht parallel zu dem Scheitelgrad (AS) ist.

15. Seitlicher Rückspiegel (R) für ein Fahrzeug, **dadurch gekennzeichnet, dass** er eine Schale (CO) nach einem der vorhergehenden Ansprüche umfasst und mit einem Rahmen (CD) fest verbunden und nach hinten durch diesen verlängert ist, mit dem ein Spiegel fest verbunden ist.

16. Fahrzeug, **dadurch gekennzeichnet, dass** es mindestens einen seitlichen Rückspiegel (R) nach Anspruch 15 umfasst.

## Claims

1. Shell (CO) for a vehicle lateral rearview mirror (R), said shell (CO) comprising an apical edge (AS), on the one hand, extended rearwards with an end portion (PT), able to be secured to, and extended rearwards with, a frame (CD) to which is secured a mirror on the other hand, an upper rear portion extending from the apical edge (AS) as far as the free end of the frame (CD) defining a so-called aerodynamic narrowing area (ZR) because of the gradual decrease in the section of the shell or of a low declivity rearwards from the latter, cooperating with the apical edge (AS) causing the air to be detached from the front portion (PV) of the vehicle so that it drops into the so-called aerodynamic narrowing area (ZR), **characterised in that** the apical edge is located on an external face of the upper portion of the shell and **in that** said shell comprises, upstream from said apical edge (AS), a discontinuity (DC) having a protrusion substantially extending along a transverse direction relatively to the air flow, said protrusion comprising a front face (FV) having an ascending slope from the front towards the rear relatively to the external face of the upper portion of the shell (CO), and a rear face (FR) extending the front face (FV) rearwards along a descending slope from the front towards the rear, the action of said discontinuity (DC) on the velocity field of the air flow induced by the leading edge of the front portion (PV) of the shell (CO) and the shape of the upper portion of the latter being able to cause detachment of the air so as to have it substantially drop upstream from said apical edge (AS) along a non-rectilinear intermediate reattachment line (L1), so that this air is then detached by said apical edge (AS) and that it drops along a rear non-rectilinear intermediate reattachment line (L2) located in said aerodynamic narrowing area (ZR) so as not to produce any audible whistling.

2. Shell according to claim 1, **characterised in that** the rear face (FR) has a slope from the front towards the rear, still strictly less than that of the front face (FV).

3. Shell according to one of claims 1 or 2, **characterised in that** said shape of the discontinuity (DC) is able to cause the air to drop along a circular arc-shaped intermediate reattachment line (L1) so that it may then be detached and dropped along a rear reattachment line (L2) having at least two inflection points.

4. Shell according to one of claims 1 to 3, **characterised in that** said shape of the discontinuity (DC) is substantially rectilinear.

5. Shell according to one of claims 1 to 3, **characterised in that** said shape of the discontinuity (DC) is curvilinear.

6. Shell according to one of claims 1 to 5, **characterised in that** said discontinuity (DC) has a variable height.

7. Shell according to claim 6, **characterised in that** said the height increases between a first internal end (E1) and an intermediate area (ZI), and then decreases between said intermediate area (ZI) and a second external end (E2), opposite to said first internal end (E1).

8. Shell according to one of claims 1 to 7, **characterised in that** said discontinuity (DC) has a front face (FV) having a first tilt from the front towards the rear, and an upper face (FR) having a second tilt from the front towards the rear, strictly less than that of said first tilt.

9. Shell according to one of claims 1 to 8, **characterised in that** said discontinuity (DC) comprises an upper end (ES) located at a level strictly below that of said apical edge (AS).

10. Shell according to one of claims 1 to 9, **characterised in that** said discontinuity (DC) has a maximum height comprised between about 1 mm and about 5 mm.

11. Shell according to claim 10, **characterised in that** said discontinuity (DC) has a maximum height equal to about 2 mm.

12. Shell according to one of claims 1 to 11, **characterised in that** said discontinuity (DC) begins at a distance from said apical edge (AS) which is comprised between about 10 mm and about 60 mm.

13. Shell according to claim 12, **characterised in that** said discontinuity (DC) begins at a distance from said apical edge (AS) which is substantially equal to 20 mm.

14. Shell according to one of claims 1 to 13, **characterised in that** said discontinuity (DC) is not parallel to said apical edge (AS).

15. Lateral rearview mirror (R) for a vehicle, **characterised in that** it comprises a shell (CO) according to one of the preceding claims and secured to, and extended rearwards with, a frame (CD) to which is secured a mirror.

16. Vehicle, **characterised in that** it comprises at least one lateral rearview mirror (R) according to claim 15.
